# EUROPÄISCHE PATENTSCHRIFT

(11) **EP 2 977 256 B1**
(45) Veröffentlichungstag und Bekanntmachung des Hinweises auf die Patenterteilung: **22.01.2020**
(21) Anmeldenummer: 15175067.6
(22) Anmeldetag: 02.07.2015
(51) Int. Cl.: B60L 58/14, H02J 7/00, B60L 50/13, B60L 50/15

(54) **VERFAHREN ZUR STEUERUNG EINER LITHIUMIONENBATTERIE EINES FLURFÖRDERZEUGS**
METHOD FOR CONTROLLING A LITHIUM ION BATTERY OF AN INDUSTRIAL TRUCK
PROCÉDÉ DE COMMANDE D'UNE BATTERIE LITHIUM-ION D'UN CHARIOT DE MANUTENTION

(30) Priorität: 24.07.2014 DE 102014110456
(43) Veröffentlichungstag der Anmeldung: 27.01.2016
(73) Patentinhaber: Linde Material Handling GmbH, 63743 Aschaffenburg (DE)
(72) Erfinder: Bergmann, Marco, 63768 Hösbach (DE)
(74) Vertreter: Patentship Patentanwaltsgesellschaft mbH

(56) Entgegenhaltungen:
- EP-A1- 2 639 096
- EP-A1- 2 719 572
- EP-A2- 1 486 371
- WO-A2-2013/061122
- DE-A1-102012 022 458
- US-A1- 2013 113 433
- US-A1- 2014 132 214

## Beschreibung

Die Erfindung betrifft ein Verfahren zur Steuerung einer Lithiumionenbatterie eines Flurförderzeugs. Insbesondere betrifft die Erfindung ein Verfahren zur Steuerung einer Lithiumionenbatterie als Traktionsbatterie eines Flurförderzeugs, wobei die Lithiumionenbatterie in einem Batteriegehäuse mindestens eine Batteriezelle und ein Batteriemanagementsystem mit Überwachungs- und Steuerungsvorrichtungen umfasst und das Batteriemanagementsystem die maximale Ladung und die minimale Entladung der Lithiumionenbatterie steuert.

Flurförderzeuge werden im zunehmenden Maße mit Traktionsbatterien ausgestattet, die nicht mehr als Blei-Säureakkumulator aufgebaut sind, sondern neuere Technologien verwenden. Dies sind insbesondere Lithiumionenbatterien als Akkumulatoren. Bei solchen Lithiumionenbatterie wird unter der zu erwartenden Lebensdauer die Zyklenzahl verstanden, die der Anzahl an Ladevorgängen mit anschließender Entladung entspricht. Die Zyklenzahl hängt von mehreren Faktoren ab. Ein Vorteil von Lithiumionenbatterien im Vergleich zu den bisher überwiegend bei Flurförderzeugen eingesetzten Blei-Säurebatterien ist die Möglichkeit, den Zustand der Lithiumionenbatterie durch diese Zyklenzahl und einen in der Lithiumionenbatterie selbst berechneten Wert eines "Gesundheitszustandes", auch bezeichnet als "State Of Health" (SOH), zu bestimmen. Diese Möglichkeit ergibt sich bei einer Lithiumionenbatterie vorteilhaft dadurch, dass ein Batteriemanagementsystem für die Steuerung des Ladevorgangs, wie auch des Entladevorgangs und die Überwachung der einzelnen Lithiumionenzellen der Batterie erforderlich ist. Zu diesem Zweck ist eine Steuerung mit den Batteriezellen in einem Batteriegehäuse der Lithiumionenbatterie integriert, die das Batteriemanagementsystem zur Verfügung stellt.

Zur Verlängerung der Lebensdauer der Lithiumionenbatterie wird folglich einer Erhöhung der Zyklenzahl angestrebt, wodurch sich der höhere Preis einer Lithiumionenbatterie im Verhältnis zu einer herkömmlichen Blei-Säurebatterie relativiert. Dabei werden die benutzten Ladegeräte und die Lithiumionenbatterie zurzeit so ausgelegt, dass die maximale Kapazität der Lithiumionenbatterie genutzt werden kann.

Ein wichtiger Faktor, der die maximale Zyklenzahl bestimmt, ist bei jedem Lade- /Entladezyklus der maximale bzw. minimale Ladezustand. Bei bekannten Verfahren zur Steuerung der Traktionsbatterie eines Flurförderzeugs sind die Systeme aus Traktionsbatterie und ein Ladegerät so ausgelegt, dass die komplette Kapazität der Traktionsbatterie zur Verfügung steht. Es wird somit die Traktionsbatterie immer maximal bzw. voll aufgeladenen und ebenso erfolgt eine Entladung bis zum zulässigen Minimalwert.

Die EP 2 719 572 A1 offenbaren ein Fahrzeug, das sowohl in einem Elektrofahrmodus wie auch in einem Hybridmodus betrieben wird. Es wird eine Anpassung der Anzeige eines Ladezustands an die Verschlechterung einer Lithiumionenbatterie sowie eine Beschränkung der maximalen Ladung offenbart.

Die US 2014/132214 A1 offenbart ebenfalls ein Fahrzeug, das sowohl in einem Elektrofahrmodus wie auch in einem Hybridmodus betrieben wird. Es wird eine Anpassung der Anzeige eines Ladezustands an die Verschlechterung einer Lithiumionenbatterie sowie eine Beschränkung der maximalen Ladung offenbart.

Die WO 2013/61122 A2 offenbart den maximalen Ladebereich einer sekundären Batterie eines mit einer Brennstoffzelle ausgestatteten Fahrzeugs zu beschränken, wenn in einem gestoppten Zustand des Fahrzeugs die Brennstoffzelle die sekundäre Batterie lädt und diese an einen externen Last anliegt.

Die EP 2 639 096 A1 offenbart ein Fahrzeug mit einem Verbrennungsmotor und einer sekundären Batterie sowie einem Motorgenerator. Dabei kann die sekundäre Batterie mit einem Ladegerät stationär geladen werden wobei zwei Modi eingeschaltet werden können, von denen einer nur ein Laden bis zu 80 % zulässt, um die Lebensdauer zu verlängern.

Der vorliegenden Erfindung liegt die Aufgabe zugrunde, ein Verfahren zur Steuerung einer Lithiumionenbatterie als Traktionsbatterie eines Flurförderzeugs zur Verfügung zu stellen, mit dem eine möglichst große Zyklenzahl ermöglicht wird und zugleich eine optimierte Anpassung an die Betriebsbedingungen des Flurförderzeugs.

Diese Aufgabe wird durch ein Verfahren zur Steuerung einer Lithiumionenbatterie mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Steuerung einer Lithiumionenbatterie als Traktionsbatterie eines Flurförderzeugs, wobei die Lithiumionenbatterie in einem Batteriegehäuse mindestens eine Batteriezelle und ein Batteriemanagementsystem mit Überwachungs- und Steuerungsvorrichtungen umfasst und das Batteriemanagementsystem die maximale Ladung und die minimale Entladung der Lithiumionenbatterie steuert, durch einen an das Batteriemanagementsystem übermittelten Steuerbefehl zwischen verschiedenen Betriebsweisen gewählt werden kann, wobei mindestens eine Betriebsweise eine reduzierte maximale Ladung und mindestens eine Betriebsweise eine erhöhte minimale Entladung aufweist. Eine an der Betriebsweise und deren maximaler Ladung und/oder minimaler Entladung orientierte Ladestandsanzeige wird an das Flurförderzeug übermittelt, so dass die Ladestandsanzeige einem der verringerten Kapazität der Traktionsbatterie bzw. einem für die minimale Entladung hochgesetzten Wert entspricht.

Durch Untersuchungen des Lade-/Entladeverhaltens einer Lithiumionenbatterie ist bekannt, dass eine erhebliche Erhöhung der möglichen Zyklenzahl möglich ist, wenn nicht die maximale Kapazität der Batterie genutzt wird. Durch das beschriebene Verfahren kann ein Benutzer die Betriebsweise der Traktionsbatterie dahingehend optimiert konfigurieren, dass eine Anpassung an die tatsächlich erforderliche Kapazität erfolgt und durch reduzierte Werte für die maximale Ladung bzw. daneben oder alternativ durch einen erhöhten Wert für die minimale Entladung eine größere Anzahl von Zyklen und somit eine größere Lebensdauer der Traktionsbatterie erreicht wird, bei einer entsprechend verringerten maximalen Kapazität. Vorteilhaft kann das beschriebene Verfahren allein durch die Software des Batteriemanagementsystems in der Lithiumionenbatterie selbst umgesetzt werden. Das für Überwachungs- und Steuerungserfordernisse bereits vorhandene Batteriemanagementsystem regelt bei allen Lithiumionenbatterie die maximal zulässige Ladung und auch Entladung. Die Umsetzung der verschiedenen Betriebsweisen kann daher allein durch Software erfolgen. Beispielsweise ist es durch das erfindungsgemäße Verfahren möglich, die Vorteile zu nutzen, die sich daraus ergeben, dass ein Flurförderzeug, etwa ein Gabelstapler, über längere Zeit nicht stets gleich genutzt wird. So kann in Spitzenzeiten, wenn der Gabelstapler voll ausgelastet und ständig in Betrieb ist, die maximale Kapazität der Batterie genutzt werden und in sonstigen Zeiten eine geringere Kapazität mit häufigerem Nachladen, durch die jedoch eine erhebliche Verlängerung der Batterielebensdauer erreicht werden kann.

Ein Bediener, beispielsweise ein Fahrer eines Gabelstaplers, orientiert sich für das Wiederaufladen der Traktionsbatterie an einer Ladestandsanzeige. Dadurch wird im Regelfall die Batterie sehr oft erst dann aufgeladen, wenn sie minimal entladen ist. Wenn jedoch die Ladestandsanzeige entsprechend der verringerten Kapazität der Traktionsbatterie bzw. einem hoch gesetzten Wert für die minimale Entladung anzeigt, wird bereits frühzeitiger erneut nachgeladen und dadurch insgesamt eine höhere Zyklenzahl sowie längere Batterielebensdauer erreicht.

Vorteilhaft wird der Steuerbefehl durch ein Schaltelement an der Lithiumionenbatterie erzeugt.

Durch ein solches Bedienelement kann ein Bediener die Lithiumionenbatterie für einen optimierten Einsatz konfigurieren. Dabei ist beispielsweise in einfacher Ausführung ein Schalter mit zwei Stellungen entsprechend zwei Betriebsweisen, etwa beispielsweise mit einer reduzierten Kapazität von 70% und ansonsten 100 % denkbar.

In einer Ausgestaltung des Verfahrens können Daten über einen Signalübertragungsweg mit einem Flurförderzeug ausgetauscht werden, bei dem die Traktionsbatterie eingesetzt wird.

Der Steuerbefehl kann von einer Steuerung des Flurförderzeugs übermittelt werden.

Es kann in einem mit der Traktionsbatterie verbundenen Flurförderzeug die Betriebsweise für eine Bedienperson angezeigt werden.

Durch eine solche grafische Darstellung, beispielsweise auf einem Bildschirm oder Display, bekommt eine Bedienperson einen zusätzlichen Hinweis, in welcher Betriebsweise sich die Batterie befindet. Dies kann beispielsweise eine Anzeige "Economy Modus" als Hinweis auf eine verringerte Kapazität sein.

In einer Ausgestaltung des Verfahrens sind Betriebsweisen mit einer reduzierten maximalen Ladung von 90 % und/oder 80 % und/oder 70 % vorgesehen.

Allgemeine Untersuchungen haben ergeben, dass beispielsweise durch eine Verringerung der maximalen Ladung um 10 % auf 90 % die Zyklenzahl von 500 Zyklen auf 1500 Zyklen gesteigert werden und bei einer weiteren Reduzierung auf 80 % auf 3000 Zyklen und bei 70 % auf 5000 Zyklen.

Es können Betriebsweisen mit einer erhöhten minimalen Entladung von 10 % und/oder 20 % vorgesehen sein.

Auch durch die Erhöhung der minimalen Entladung kann eine weitere Steigerung der Zyklenzahl erreicht werden. Beispielsweise ergibt sich eine Verdoppelung der Zyklenzahl von 500 Zyklen auf 1000 Zyklen, wenn die minimale Entladung auf einen Wert von 20 % gesetzt wird bei unveränderter maximaler Ladung von 100 %. Bei einer maximalen Ladung von 90 % wird durch eine Anhebung der minimalen Entladung auf 20 % die Zyklenzahl von 1500 auf 2000 angehoben sowie bei einer maximalen Ladung von 80 % wird die Zyklenzahl von 3000 auf 3500 angehoben. Bei einer maximalen Ladung von 70 % kann durch eine Anhebung der minimalen Entladung auf 10 % eine Steigerung der Zyklenzahl von 5000 auf 5500 erreicht werden. Eine weitere Steigerung auf 6000 Zyklen ergibt sich, wenn die minimale Entladung auf einen Wert von 20 % festgelegt wird. In diesem letzteren Fall hat die Batterie insgesamt nur noch eine Kapazität aus der Differenz zwischen 70 % und 20 %, entsprechend 50 %.

Vorteilhaft ist eine Betriebsweise vorgesehen, bei der die erhöhte minimale Entladung und/oder reduzierte maximale Ladung frei wählbar eingestellt werden kann.

Grundsätzlich ist es auch denkbar, das beschriebene Verfahren zur Erhöhung der Zyklenzahl auch bei anderen Anwendungen wie etwa einem E-Bike oder einem Kraftfahrzeug zu verwenden.

## Patentansprüche

1. Verfahren zur Steuerung einer Lithiumionenbatterie als Traktionsbatterie eines Flurförderzeugs, wobei die Lithiumionenbatterie in einem Batteriegehäuse mindestens eine Batteriezelle und ein Batteriemanagementsystem mit Überwachungs- und Steuerungsvorrichtungen umfasst und das Batteriemanagementsystem die maximale Ladung und die minimale Entladung der Lithiumionenbatterie steuert,
wobei durch einen an das Batteriemanagementsystem übermittelten Steuerbefehl zwischen verschiedenen Betriebsweisen gewählt werden kann, wobei mindestens eine Betriebsweise eine reduzierte maximale Ladung und mindestens eine Betriebsweise eine erhöhte minimale Entladung aufweist,
**dadurch gekennzeichnet,**
**dass** eine an der Betriebsweise und deren maximaler Ladung und/oder minimaler Entladung orientierte Ladestandsanzeige an das Flurförderzeug übermittelt wird, so dass die Ladestandsanzeige einem der verringerten Kapazität der Traktionsbatterie bzw. einem für die minimale Entladung hochgesetzten Wert entspricht.

2. Verfahren nach Anspruch 1,
**dadurch gekennzeichnet,**
**dass** der Steuerbefehl durch ein Schaltelement an der Lithiumionenbatterie erzeugt wird.

3. Verfahren nach Anspruch 1 oder 2,
**dadurch gekennzeichnet,**
**dass** Daten über einen Signalübertragungsweg mit einem Flurförderzeug ausgetauscht werden können, bei dem die Traktionsbatterie eingesetzt wird.

4. Verfahren nach Anspruch 3,
**dadurch gekennzeichnet,**
**dass** der Steuerbefehl von einer Steuerung des Flurförderzeugs übermittelt wird.

5. Verfahren nach einem der Ansprüche 3 bis 4,
**dadurch gekennzeichnet,**
**dass** in einem mit der Traktionsbatterie verbundenen Flurförderzeug die Betriebsweise für eine Bedienperson angezeigt wird.

6. Verfahren nach einem der Ansprüche 1 bis 5,
**dadurch gekennzeichnet,**
**dass** Betriebsweisen mit einer reduzierten maximalen Ladung von 90 % und/oder 80 % und/oder 70 % vorgesehen sind.

7. Verfahren nach einem der Ansprüche 1 bis 6,
**dadurch gekennzeichnet,**
**dass** Betriebsweisen mit einer erhöhten minimalen Entladung von 10 % und/oder 20 % vorgesehen sind.

8. Verfahren nach einem der Ansprüche 1 bis 7,
**dadurch gekennzeichnet,**
**dass** eine Betriebsweise vorgesehen ist, bei der die erhöhte minimale Entladung und/oder reduzierte maximale Ladung frei wählbar eingestellt werden kann.

## Claims

1. Method for controlling a lithium ion battery as a traction battery of an industrial truck, wherein the lithium ion battery comprises at least one battery cell and a battery management system with monitoring and control devices in a battery housing, and the battery management system controls the maximum charge and the minimum discharge of the lithium ion battery,
wherein
it is possible to choose between different operating modes by a control command transmitted to the battery management system, wherein at least one operating mode has a reduced maximum charge and at least one operating mode has an increased minimum discharge,
**characterized in that**
a charge state indication orientated to the operating mode and its maximum charge and/or minimum discharge is transmitted to the industrial truck, so that the charge state indication corresponds to a value of the reduced capacity of the traction battery or an increased value for the minimum discharge.

2. Method according to Claim 1
**characterized in that**
the control command is generated by a switching element on the lithium ion battery.

3. Method according to Claim 1 or 2,
**characterized in that**
data can be exchanged via a signal transmission path with an industrial truck in which the traction battery is used.

4. Method according to Claim 3,
**characterized in that**
the control command is transmitted by a controller of the industrial truck.

5. Method according to either of Claims 3 and 4,
**characterized in that**
the operating mode is displayed for an operator in an industrial truck connected to the traction battery.

6. Method according to one of Claims 1 to 5,
**characterized in that**
operating modes having a reduced maximum charge of 90% and/or 80% and/or 70% are provided.

7. Method according to one of Claims 1 to 6,
**characterized in that**
operating modes having an increased minimum discharge of 10% and/or 20% are provided.

8. Method according to one of Claims 1 to 7,
**characterized in that**
an operating mode is provided in which the increased minimum discharge and/or reduced maximum charge can be set freely selectably.

## Revendications

1. Procédé de commande d'une batterie au lithium-ion en tant que batterie de traction d'un chariot de manutention, dans lequel la batterie au lithium-ion comprend, dans un boîtier de batterie, au moins un élément de batterie et un système de gestion de batterie comportant des dispositifs de surveillance et de commande, et le système de gestion de batterie commande la charge maximale et la décharge minimale de la batterie au lithium-ion,
dans lequel une sélection entre différents modes de fonctionnement peut être effectuée par l'intermédiaire d'instruction de commande transmise au système de gestion de batterie, dans lequel au moins un mode de fonctionnement présente une charge maximale réduite et au moins un mode de fonctionnement présente une décharge minimale augmentée,
**caractérisé en ce qu'**un indicateur de niveau de charge orienté vers le mode de fonctionnement et sa charge maximale et/ou sa décharge minimale est transmis au chariot de manutention de manière à ce que l'indicateur de niveau de charge corresponde à l'une de la capacité réduite de la batterie de traction ou d'une valeur de la décharge minimale réglée à un niveau élevé.

2. Procédé selon la revendication 1,
**caractérisé en ce que** l'instruction de commande est générée par un élément de commutation au niveau de la batterie au lithium-ion.

3. Procédé selon la revendication 1 ou 2,
**caractérisé en ce que** des données peuvent être échangées par l'intermédiaire d'un trajet de transmission de signaux avec un chariot de manutention dans lequel la batterie de traction est utilisée.

4. Procédé selon la revendication 3,
**caractérisé en ce que** l'instruction de commande est transmise par une unité de commande du chariot de manutention.

5. Procédé selon l'une des revendications 3 à 4,
**caractérisé en ce que** le mode de fonctionnement est indiqué à un opérateur dans un chariot de manutention relié à la batterie de traction.

6. Procédé selon l'une des revendications 1 à 5,
**caractérisé en ce qu'**il est prévu des modes de fonctionnement présentant une charge maximale réduite à 90% et/ou à 80% et/ou à 70%.

7. Procédé selon l'une des revendications 1 à 6,
**caractérisé en ce qu'**il est prévu des modes de fonctionnement présentant une décharge minimale augmentée à 10 % et/ou à 20 %.

8. Procédé selon l'une des revendications 1 à 7,
**caractérisé en ce qu'**il est prévu un mode de fonctionnement dans lequel la décharge minimale augmentée et/ou la charge maximale réduite peut être réglée de manière librement sélectionnable.
